# EUROPEAN PATENT SPECIFICATION

(11) **EP 2 586 689 B1**
(45) Date of publication and mention of the grant of the patent: **17.06.2015**
(21) Application number: 12187917.5
(22) Date of filing: 10.10.2012
(51) Int. Cl.: B62J 15/02, B62J 25/00, B62K 15/00

(54) **Motor driven vehicle**
Motorbetriebenes Fahrzeug
Véhicule à moteur

(30) Priority: 26.10.2011 JP 2011235007
(43) Date of publication of application: 01.05.2013
(73) Proprietor: Honda Motor Co., Ltd., Tokyo 107-8556 (JP)
(72) Inventor: Yamazaki, Takayuki, Saitama, 351-0193 (JP)
(74) Representative: Beder, Jens

(56) References cited:
- EP-A1- 2 106 993
- WO-A1-99/43538
- CN-U- 201 520 358
- DE-A1- 10 063 322
- US-A- 3 560 021
- US-A1- 2003 080 535

## Description

The present invention relates to a motor driven vehicle which includes a so-called movable fender.

When a vehicle runs, a front wheel and a rear wheel splash muddy water. In order to prevent the muddy water from being upwardly scattered, a front fender is attached for the front wheel and a rear fender is attached for the rear wheel (refer to, for example, Japanese Patent No. 4113695 (figure 1)).

As shown in figure 1 of Japanese Patent No. 4113695, in a motorcycle, an upper face of a front wheel (1) (a numeral in parentheses represents a reference character described in Japanese Patent No. 4113695. This applies also to the following description) is covered with a front fender to which no reference character is applied, and an upper face of a rear wheel (7) is covered with a rear fender (15).

In recent years, a motor driven vehicle which does not emit exhaust gas has come to be noted. Also in the motor driven vehicle, a front fender for covering a front wheel and a rear fender for covering a rear wheel are required. Meanwhile, in the motor driven vehicle, a fuel tank is replaced by a battery and an engine is replaced by a motor in a wheel, and no exhaust pipe is required. Therefore, compactification of the motor driven vehicle is easy.

Further, no fuel is required, and by adopting a sealed battery, it is possible to keep the elongated vehicle in an uprightly standing state. By keeping the vehicle in an uprightly standing state, the floor area of the keeping place can be reduced significantly. Such motor driven vehicles can be kept (parked) in a so-called parking place.

If a vehicle stands uprightly, then the front wheel and the rear wheel concern. In particular, since the front wheel and the rear wheel are dirty with the mud, the dirt may possibly be transferred to a pedestrian passing nearby. As a countermeasure, it is effective to put a vehicle body cover (cloth cover or resin fiber cover which covers the overall vehicle body).

However, if the vehicle body cover is carried on the vehicle, then the carrying space of the vehicle decreases, and in the case of a motorcycle, this has an influence on accommodation of rain gears, tools and articles.

A technology is demanded which can cover a front wheel or a rear wheel without using a vehicle body cover of cloth which generally covers a vehicle body.

A motor driven vehicle, in which all features of the precharacterizing part of claim 1 are disclosed, is described in WO 99/43538 A1.

It is an object of the present invention to provide a motor driven vehicle with which transfer of dirt from the wheel to a person in a state in which the motor driven vehicle is erected uprightly to park or move the vehicle in an erected state can be prevented easily.

This object is achieved by a motor driven vehicle according to the enclosed independent claim 1. Advantageous features of the present invention are defined in the corresponding subclaims.

### [Effect of the Invention]

While the motor driven vehicle is running, the front fender is disposed at the position at which it covers an upper portion of the front wheel, and the rear fender is disposed at the position at which it covers an upper portion of the rear wheel.

When the motor driven vehicle is not running, if the vehicle is erected uprightly, then the front fender or the rear fender is moved to the passing person side to cover the front wheel or the rear wheel.

Even if a vehicle body cover for covering the entire vehicle body is not used, the front wheel or the rear wheel can be covered with the front fender or the rear fender. According to the present invention, reduction of the accommodating space which appears which the vehicle body cover is carried on the vehicle does not appear.

In the invention as set forth in claim 2, at least one of the front fender and the rear fender is attached to the front supporting member or the rear supporting member through the friction mechanism. By the frictional force of the friction mechanism, the front fender or the rear fender can be held by the front supporting member or the rear supporting member.

In the invention as set forth in claim 3, at least one of the front fender and the rear fender is attached to the front supporting member or the rear supporting member through the click ball mechanism. By a click action of the flick ball mechanism, the front fender or the rear fender can be held by the front supporting member or the rear supporting member.

In the invention as set forth in claim 4, the roller is provided at a rear portion of the vehicle body.

By the roller, the vehicle which is a heavy article can be readily moved to an arbitrary place. When the motor driven vehicle is to be kept, the vehicle is permitted to stand independently by the roller and the rear wheel. Since the independently standing posture exhibits a vertically elongated form, the floor area when the motor driven vehicle is kept can be reduced.

In the invention as set forth in claim 4, the grip which can be pulled out is provided at a front portion of the vehicle body.

By pulling the grip when the roller is to be used, the motor driven vehicle can be moved to an arbitrary place. The moving operation is further facilitated.

In the invention as set forth in claim 5, the roller is provided at a front portion of the vehicle body.

By the roller, the vehicle which is a heavy article can be moved readily to an arbitrary position. When the motor driven vehicle is kept, the vehicle is permitted to stand independently by the roller and the rear wheel. Since the independently standing posture exhibits a vertically elongated form, the floor area when the motor driven vehicle is kept can be reduced.

In the invention as set forth in claim 5, the grip which can be pulled out is provided at a rear portion of the vehicle body.

By pulling the grip when the roller is to be used, the motor driven vehicle can be moved to an arbitrary place. The moving operation is further facilitated.

In the invention as set forth in claim 6, the steering lock mechanism for disabling steering of a steering wheel is provided.

The steering wheel can be disabled against steering by the steering lock mechanism. Since the steering wheel does not sway when the motor driven vehicle is moved, the moving operation is facilitated.

In the invention as set forth in claim 7, the lock lever is provided in the proximity of the brake lever. Since the lock lever is provided at a position at which it can be operated readily by a driver, operations for steering locking and unlocking are facilitated.

FIG. 1 is a perspective view of a motor driven vehicle according to the present invention.
FIG. 2 is an exploded perspective view of essential part of a vehicle body of the motor driven vehicle according to the present invention.
FIG. 3 is a perspective view of the motor driven vehicle as viewed from rearwardly.
FIG. 4 is a block diagram around a vehicle-carried battery.
FIG. 5 is a view showing an example of a modification of FIG. 4.
FIG. 6 is an exploded perspective view of a handle post.
FIG. 7 is a view showing an attachment structure of a handle grip.
FIG. 8 is a sectional view taken along line 8-8 of FIG. 7.
FIG. 9 is a view of operation of FIG. 8.
FIG. 10 is a sectional view of a handle post locking mechanism.
FIG. 11 is a view of operation of the handle post locking mechanism.
FIG. 12 is a view showing a structure of a steering locking mechanism.
FIG. 13 is a view of operation of FIG. 12.
FIG. 14 is a view illustrating a procedure of folding the handle post.
FIG. 15 is a view showing the folded handle post.
FIG. 16 is an exploded view with wheels removed from the vehicle body.
FIG. 17 is a sectional view of the front wheel which includes a friction mechanism.
FIG. 18 is a view illustrating a procedure of erecting the vehicle uprightly.
FIG. 19 is a view showing an example of a modification of FIG. 18.
FIG. 20 is a sectional view showing the front wheel which includes a click ball mechanism.
FIG. 21 is a view showing an example of a modification of FIG. 12.
FIG. 22 is a plan view of essential part of FIG. 21.
FIG. 23 is a view of operation of FIG. 22.

An embodiment of the present invention is described below with reference to the accompanying drawings. It is to be noted that the drawings should be viewed in the direction of reference characters. The forward and rearward directions and the leftward and rightward directions are defined with reference to a driver.

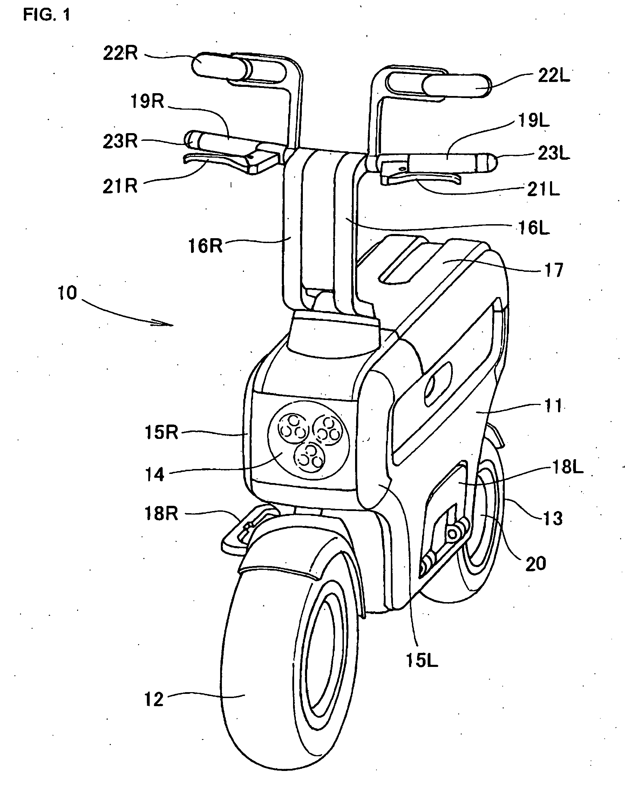

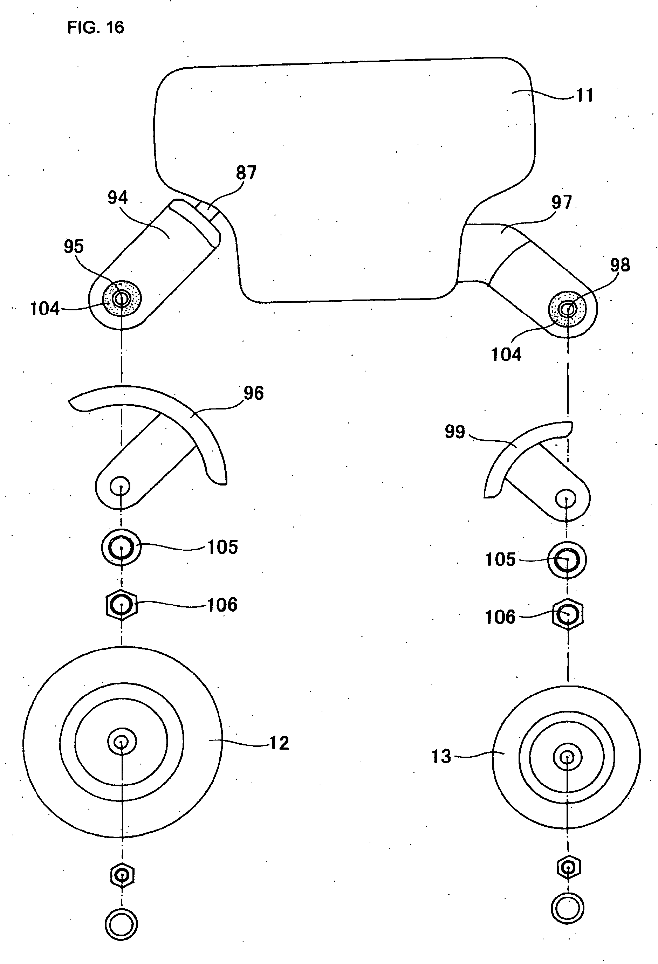

A characteristic structure of the present invention is described with reference to FIGS. 16 to 20. Prior to the description, a vehicle body structure to which the characteristic structure of the present invention can be applied more preferably is described with reference to FIGS. 1 to 19.

As shown in FIG. 1, the motor driven vehicle 10 includes a front wheel 12 and a rear wheel 13 provided on a vehicle body 11 of the box type, and includes a headlamp 14, a left front winker 15L (L is a suffix representing the left; this similarly applies also in the following description) and a right front winker 15R (R is a suffix representing the right; this similarly applies also in the following description) at front face of the vehicle body 11. The motor driven vehicle 10 further includes handle posts 16L and 16R at a front portion of an upper face of the vehicle body 11 and includes a seat 17 at a rear portion of the upper face of the vehicle body 11. The motor driven vehicle 10 further includes foldable steps 18L and 18R on side faces of the vehicle body 11. The motor driven vehicle 10 is a motorized two-wheeled vehicle driven by an electric motor 20 built in the rear wheel 13.

For the convenience, the left step 18L is shown in an uprightly standing (non-used state, accommodated state) while the right step 18R is shown in a folded down state (used state).

The driver can start the motor driven vehicle 10 to run by sitting on the seat 17, placing the feet on the foldable steps 18L and 18R, gripping a handle grip 19L at an upper portion of the left handle post 16L and gripping a handle grip 19R at an upper portion of the right handle post 16R and rotating the right handle grip 19R. When the motor driven vehicle 10 is running, the driver can brake by left and right brake levers 21L and 21R and visually observe rearwardly on left and right back mirrors 22L and 22R. Since side-marker lamps 23L and 23R are provided on the vehicle width outer sides of the handle grips 19L and 19R, the vehicle width is let recognized from the outside.

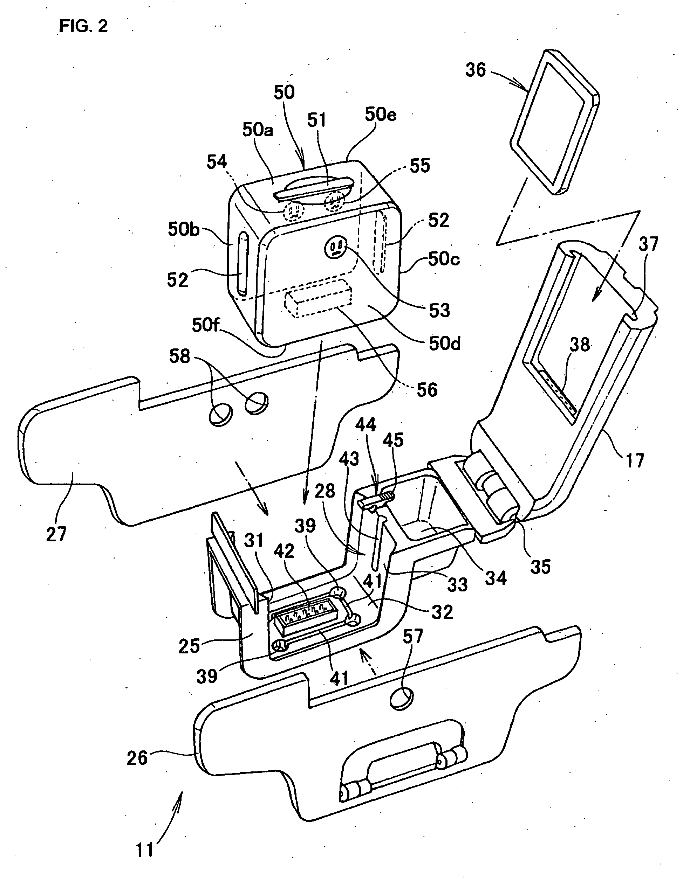

FIG. 2 is an exploded perspective view of essential part of the vehicle body 11. The vehicle body 11 includes, as principal components thereof, a central frame 25 disposed centrally in the vehicle widthwise direction, a left side frame 26 extending along the left side face of the central frame 25, and a right side frame 27 extending along the right side face of the central frame 25.

The central frame 25 is configured from a front wall portion 31, a bottom portion 32 and a rear wall portion 33 which configure a battery accommodating region 28, and a container 34 provided continuously rearwardly of the rear wall portion 33 (with respect to the vehicle body). The seat 17 can be attached for opening and closing movement to a rear portion of the container 34 through a hinge 35.

The seat 17 has, on a bottom face (lower face) thereof, a pocket portion 37 for removably accommodating a tablet type terminal 36 therein. This tablet type terminal 36 can serve also as a vehicle carried computer when the vehicle is running (details are hereinafter described). When the vehicle is not running, by opening the seat 17 and erecting the tablet type terminal 36 uprightly as seen in the figure, the driver can enjoy an image similarly to that on a television receiver. Or, the tablet type terminal 36 can be utilized as a network information acquiring tool as a personal computer.

In the battery accommodating region 28, a plurality of leg accommodating recessed portions 39 are provided on the bottom portion 32 and communicated with each other by a communicating groove 41. A vehicle body side power supply terminal 42 is disposed in a region surrounded by the leg accommodating recessed portions 39.

A vertically elongated recessed guide portion 43 is provided on the rear wall portion 33. Although another recessed guide portion is provided also on the front wall portion 31, the front wall portion 31 is not shown for the convenience of illustration.

In addition, a locking mechanism 44 is attached to the rear wall portion 33. An operating element 45 for the locking mechanism 44 extends into the container 34. Preferably, the operating element 45 is disposed rather near to the right end or the left end of the container 34. By this arrangement, there is no possibility that the operating element 45 may make an obstacle when a small article is placed into or out of the container 34.

A vehicle-carried battery 50 is a comparatively simple hexahedron and has a grip 51 on an upper face 50a thereof; has a vertically elongated projection 52 on a front face 50b and a rear face 50c thereof; has a charging portion 53 on a left side face 50d thereof; has discharging portions 54 and 55 on a right side face 50e thereof; and has a battery side power supply terminal 56 on a lower face 50f thereof.

By fitting the projections 52 into the recessed guide portions 43 and moving down the vehicle-carried battery 50, the vehicle-carried battery 50 can be smoothly accommodated into the battery accommodating region 28. By the fitting between the projections 52 and the recessed guide portions 43, the battery side power supply terminal 56 can be fitted into the vehicle body side power supply terminal 42 without deflection. Similarly, by the fitting between the projections 52 and the recessed guide portions 43, the vehicle-carried battery 50 can be pulled up without deflection.

The projections 52 may be changed to recesses. In this instance, the recessed guide portions 43 may be changed to projecting guide portions.

On the left side frame 26, a charging side opening 57 is provided at a position corresponding to the charging portion 53 of the vehicle-carried battery 50.

On the right side frame 27, discharging side openings 58, 58 are provided at positions corresponding to the discharging portions 54 and 55 of the vehicle-carried battery 50.

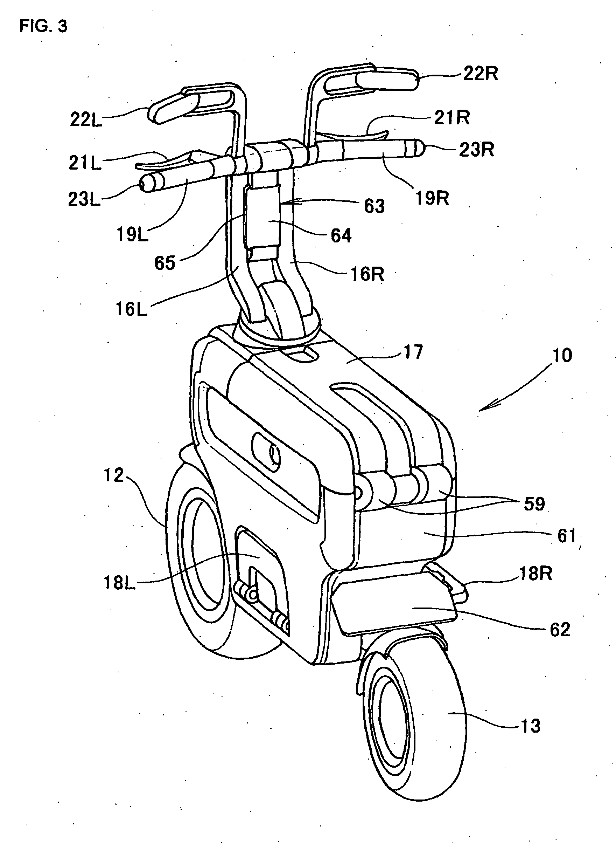

FIG. 3 is a perspective view of the motor driven vehicle 10 as viewed from rearwardly. The motor driven vehicle 10 includes rollers 59 on a rear face of the vehicle body 11 and further includes a tail lamp unit 61 and a license plate 62 below the rollers 59.

Further, the motor driven vehicle 10 includes a portable terminal 63 between the left and right handle posts 16L and 16R. This portable terminal 63 is configured from a display section 64 which carries out display of a vehicle speed and a direction indication and display of a power storage amount and other states, and a terminal main body 65 in which an arithmetic operation circuit and a memory are built. In other words, the motor driven vehicle 10 does not fixedly have a meter unit, and instead, the portable terminal 63 substitutes for the meter unit.

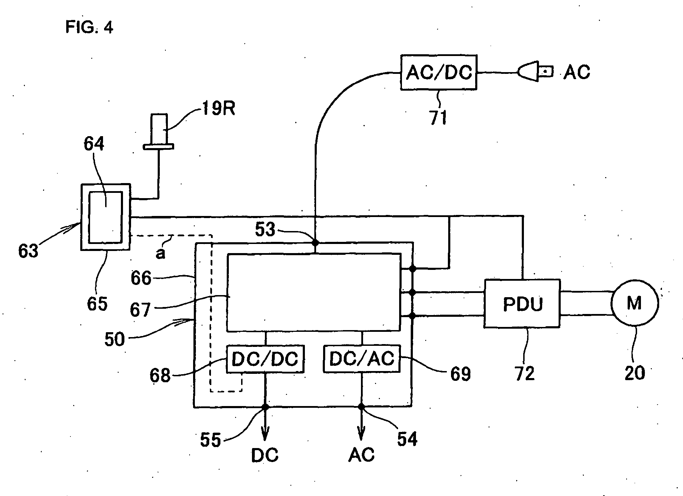

As shown in FIG. 4, the vehicle-carried battery 50 includes a battery main body 67 built in a battery case 66 and further includes transformers 68 and 69 built in the battery case 66. The transformer 68 is a DC/DC converter for transforming dc current into dc current of a different voltage, and the other transformer 69 is a DC/AC inverter for converting, for example, dc current of 12 V into ac current of 100 V.

When the motor driven vehicle 10 is not running, predetermined dc current (for example, dc current of 24 V) is supplied from a commercial power supply (AC 100 V, 110 V, 200 V, 220 V and so forth) to the charging portion 53 through a charger 71 to carry out charging.

When the motor driven vehicle 10 is running, power is supplied from the charging portion 53 to the electric motor 20 through a driving circuit 72 to carry out running. Thereupon, the amount of rotation of the right handle grip 19R is detected by a sensor and the information is sent to the portable terminal 63 so that the driving circuit 72 may be controlled by an instruction of the portable terminal 63 to adjust the running speed. It is to be noted that the information of rotation of the right handle grip 19R may be sent to the driving circuit 72.

When the motor driven vehicle 10 is not running, for example, upon outdoor camping, the vehicle-carried battery 50 can be used as a power supply. In particular, the discharging portion 54 can be used to receive supply of AC 100 V (or AC 110 V) so as to be used for a rice cooker or for illumination.

Further, the other discharging portion 55 can be used to receive supply of DC 12 V so as to be used for a personal computer.

The vehicle-carried battery 50 not only can receive supply of power while it is accommodated in the vehicle body but also can receive supply of power also in a state in which it is removed from the vehicle body, that is, by the vehicle-carried battery 50 by itself.

Further, a power supply system a indicated by an imaginary line is extended from the transformer 68 and electrically connected to the portable terminal 63 so that power is supplied to the portable terminal 63 normally or at any time. This can prevent decrease of the remaining electric amount of the built-in battery built in the portable terminal 63.

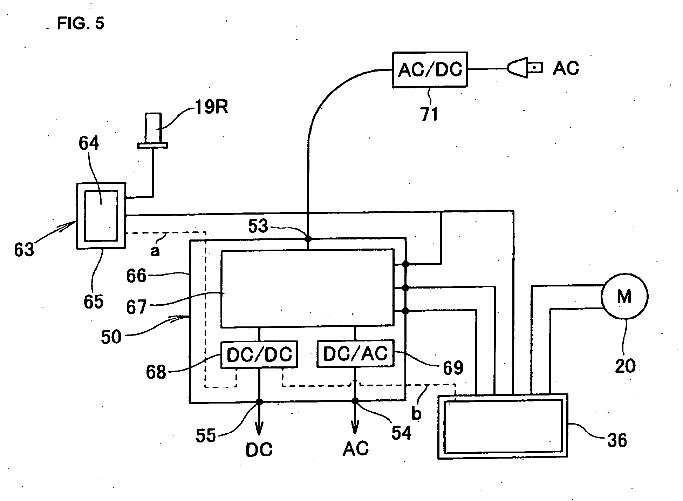

FIG. 5 is a view showing an example of an alteration of FIG. 4. The driving circuit 72 in FIG. 4 is replaced by the tablet type terminal 36. Since the other part is same as that in FIG. 4, the reference characters are diverted while detailed description of them is omitted.

By extending a power supply system b indicated by an imaginary line is extended from the transformer 69 and electrically connecting the power supply system b to the tablet type terminal 36, power is supplied to the tablet type terminal 36 normally or at any time. This can prevent decrease of the remaining electric amount of the built-in battery built in the tablet type terminal 36.

The motor driven vehicle of the present invention is an electric motorcycle wherein the handle posts and the handle grips can be folded. The structure which implements such folding is described in detail below.

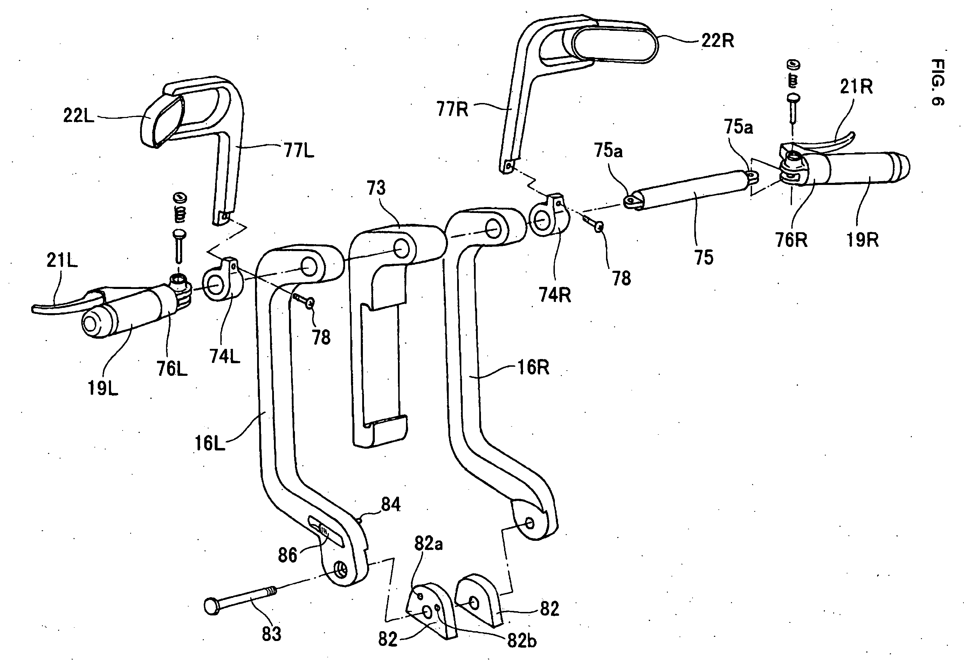

As shown in FIG. 6, an L-shaped portable terminal holder 73 is placed between the channel-shaped handle posts 16L and 16R. Ring-shaped mirror supporting members 74L and 74R are placed on the outer sides in the vehicle widthwise direction with respect to the handle posts 16L and 16R, and a rod 75 is inserted into the ring shaped mirror supporting members 74L and 74R.

The rod 75 projects at the opposite ends thereof, and brake lever supporting members 76L and 76R are attached to the projecting ends of the rod 75. In the present example, the handle grip 19L is integrated with the left brake lever supporting member 76L while the handle grip 19R which serves also as an accelerator grip is provided on the right brake lever supporting member 76R.

A mirror stay 77R having an F shape as viewed from the driver is fastened to the right mirror supporting member 74R such that it can swing leftwardly and rightwardly. The back mirror 22R is attached for pivotal motion to the mirror stay 77R.

Similarly, a mirror stay 77L having an F shape is attached to the left mirror supporting member 74L with another screw 78 such that it can swing leftwardly and rightwardly. The back mirror 22L is attached for pivotal motion to the mirror stay 77L.

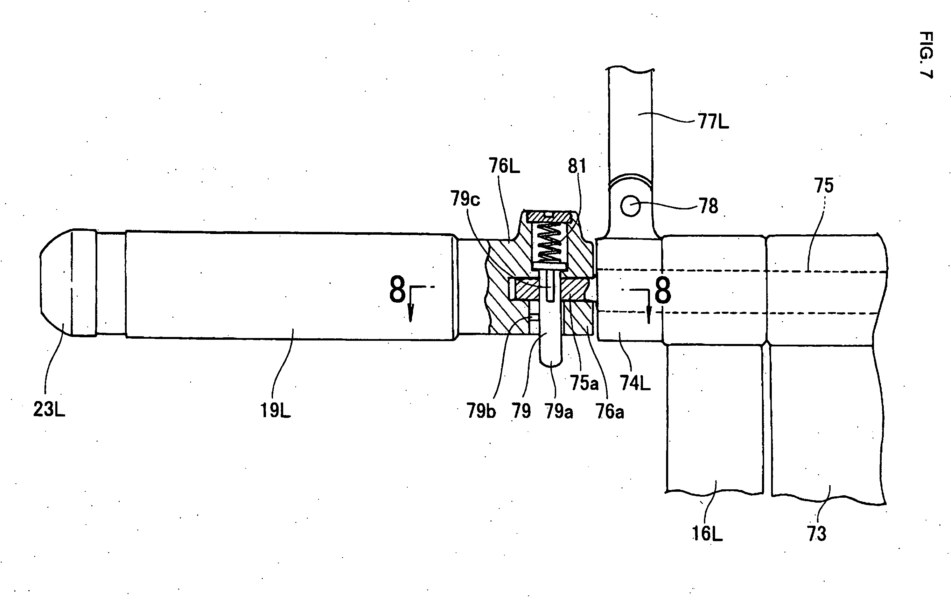

As shown in FIG. 7, the brake lever supporting member 76L is fitted at a forked portion 76a thereof with a tongue 75a formed at an end portion of the rod 75 and is connected by a headed pin 79 extending downwardly from above. The headed pin 79 is biased downwardly by a compression spring 81. The headed pin 79 projects at a lower portion thereof downwardly from the brake lever supporting member 76L such that this headed pin 79 is pushed up by the thumb or the like of the left hand. It is to be noted that, since a detect projection 79b projects from the headed pin 79 and is fitted in a groove on the brake lever supporting member 76L side, there is no possibility that the headed pin 79 may rotate around the axis.

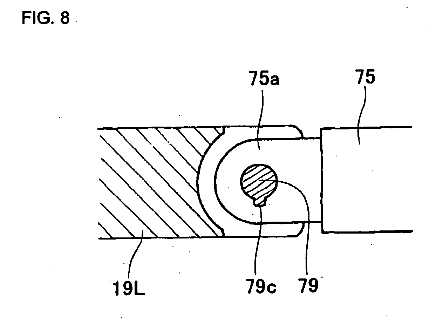

As shown in FIG. 8 which is a sectional view taken along line 8-8 of FIG. 7, a key portion 79c is formed integrally on the headed pin 79. When the handle grip 19L is positioned on the axis of the rod 75, the handle grip 19L is fixed with respect to the rod 75 by a fixing action of the key portion 79c.

If the headed pin 79 is pushed up in FIG. 7, then the key portion 79c moves upwardly and is removed from the tongue 75a.

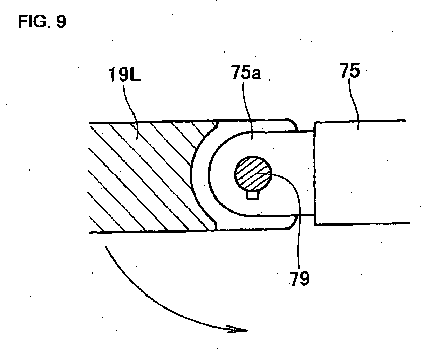

Consequently, the handle grip 19L can be rotated horizontally around the headed pin 79 as seen in FIG. 9. From the foregoing, when it is necessary to fold the handle grip 19L, it can be folded at any time.

It is to be noted that, in FIG. 7, the headed pin 79 projects downwardly (toward the road surface). On the motorcycle, a winker switch and a horn switch are projected toward the driver. Since the winker switch and the horn switch extend horizontally and the headed pin 79 extends downwardly, when the winker switch or the horn switch is operated, there is no possibility of touching with the headed pin 79.

Now, a folding procedure of the handle posts is described.

As shown in FIG. 6, the left and right handle posts 16L and 16R are connected to stays 82, 82, which have a lower end of a shape of a semicircular plate, by a rod 83. The handle posts 16L and 16R can swing in the forward and rearward directions of the vehicle body around the rod 83.

A normal position hole 82a and a folded position hole 82b are provided on one of the stays 82 such that, by selectively inserting a lock pin 84 into the hole 82a or 82b, the handle posts 16L and 16R can be fixed to a desired position. A structure therefor is described with reference to a next figure.

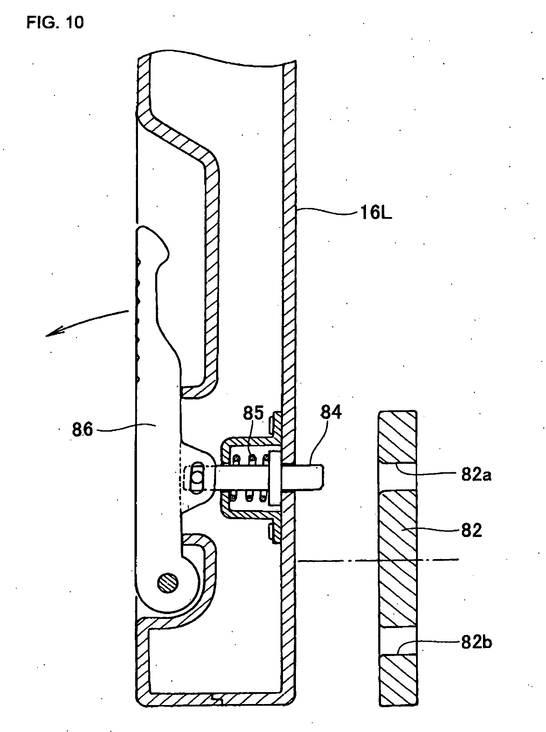

As shown in FIG. 10, the lock pin 84 is attached for retraction to a lower portion of the handle post 16L. This lock pin 84 is biased so as to project by a spring 85. Further, the lock pin 84 is connected to an unlocking lever 86.

By pulling the unlocking lever 86, the lock pin 84 can be removed from the hole 82a or the hole 82b. If the unlocking lever 86 returns, then the lock pin 84 is fitted into the hole 82a or the hole 82b by an action of the spring 85 so that the handle post 16L is fixed to the stay 82.

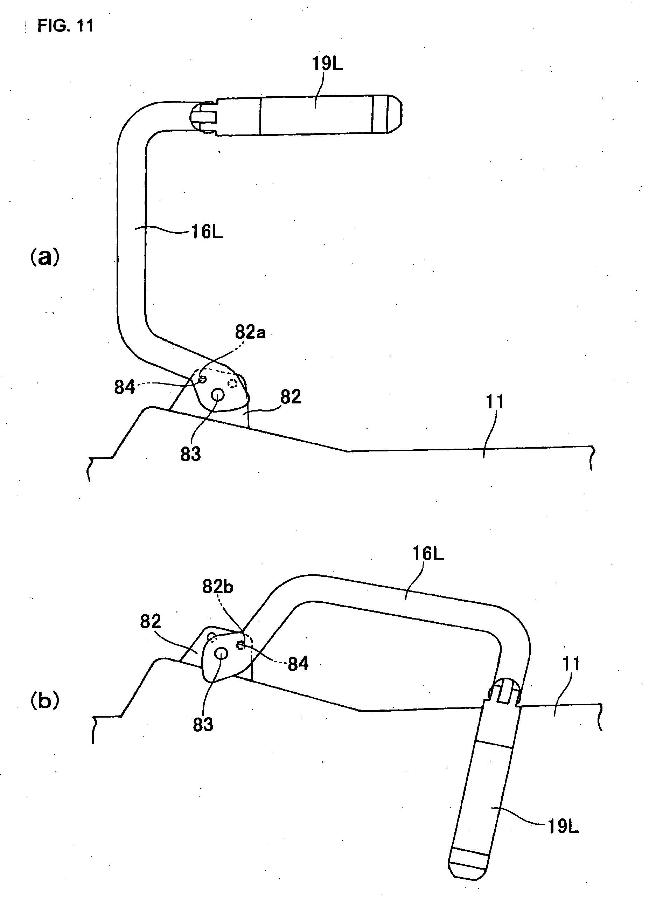

In particular, as shown in (a) of FIG. 11, at a normal position, the lock pin 84 is fitted in the hole 82a to fix the handle post 16L to the stay 82.

Meanwhile, as shown in (b) of FIG. 11, at a folded position, the lock pin 84 is fitted in the hole 82b to fix the handle post 16L to the stay 82.

Incidentally, in order to save the space of the parking place, it is desirable to keep a horizontally elongated vehicle in an upright state. Further, after the vehicle is folded, it may have to move to the place for keeping. It is not preferable that, upon such movement, the steering wheel sways. Therefore, a steering locking mechanism for disabling steering of the steering wheel is required. An example of the steering locking mechanism is described below.

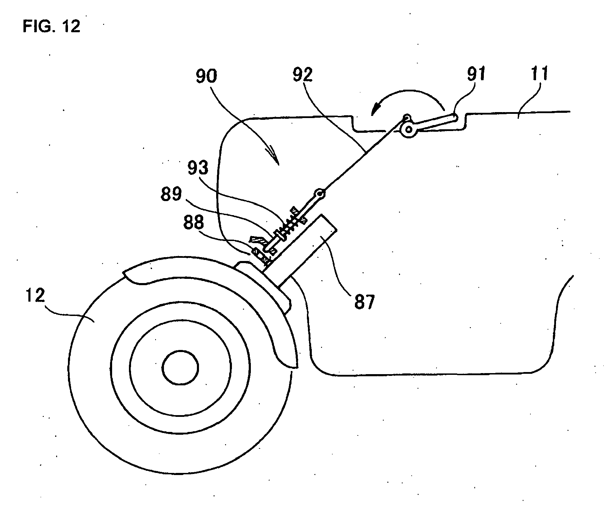

As shown in FIG. 12, a perforated plate 88 is attached to a steering shaft 87 extending from the front wheel 12 as a steering wheel. On the vehicle body 11 side, a lock pin 89, a lock lever 91 and a wire 92 for interconnecting the lock lever 91 and the lock pin 89 are provided. In other words, a steering lock mechanism 90 is configured from the perforated plate 88, lock pin 89, lock lever 91, wire 92, and a spring 93.

Usually, the lock pin 89 is spaced from the perforated plate 88 as seen in FIG. 12.

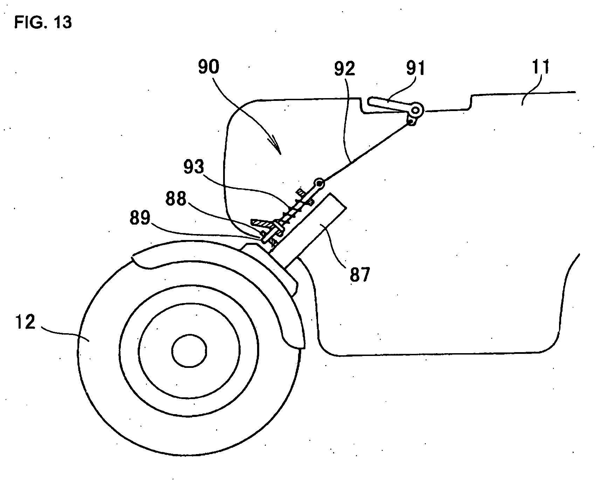

If steering locking becomes required, then the lock lever 91 is operated in the direction indicated by an arrow mark. Consequently, by a biasing action of a spring 93, the lock pin 89 is advanced and fitted into the perforated plate 88, thereby to disable steering as seen in FIG. 13.

It is to be noted that, in the case where a handle locking mechanism is provided on the vehicle, the steering lock mechanism 90 can be omitted.

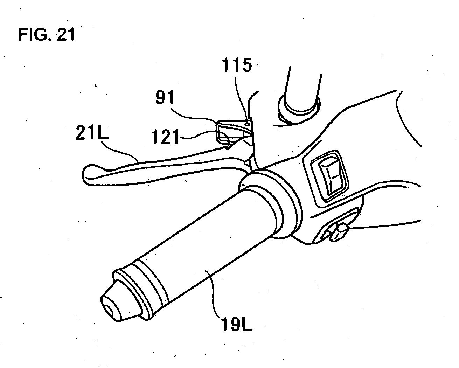

Although the lock lever 91 is provided on the vehicle body 11, if the operability is taken into consideration, then it is demanded to provide the lock lever 91 in the proximity of the brake lever. Such alteration example is described with reference to FIG. 21 hereinafter described.

Now, a folding procedure of the handle post is described generally.

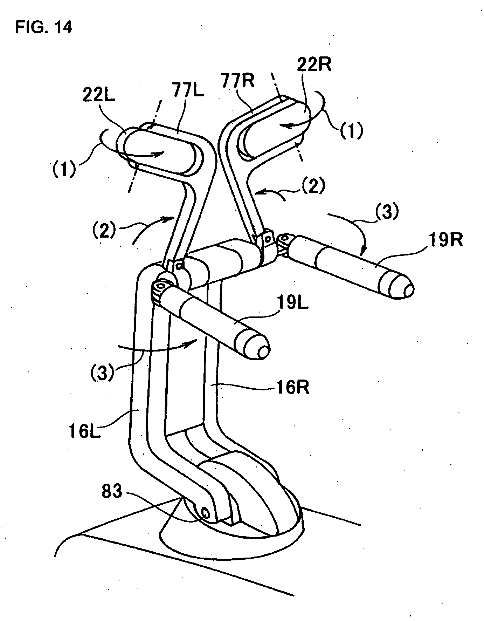

Referring to FIG. 14, the back mirrors 22L and 22R are accommodated into the mirror stays 77L and 77R as indicated by arrow marks (1). As occasion demands, the mirror stays 77L and 77R are displaced to the vehicle body center (arrow marks (2)). The handle grips 19L and 19R are folded as indicated by arrow marks (3) such that they extend rearwardly of the vehicle body.

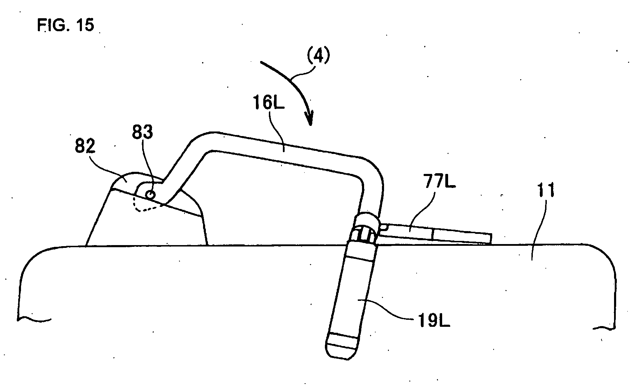

The handle post 16L is pivoted as indicated by an arrow mark (4) around the rod 83 so as to be folded as seen in FIG. 15. As a result, such a form is established that the handle grip 19L extends along a side face of the vehicle body 11 and the handle post 16L and the mirror stay 77L extend along the upper face of the vehicle body 11 (seat upper face).

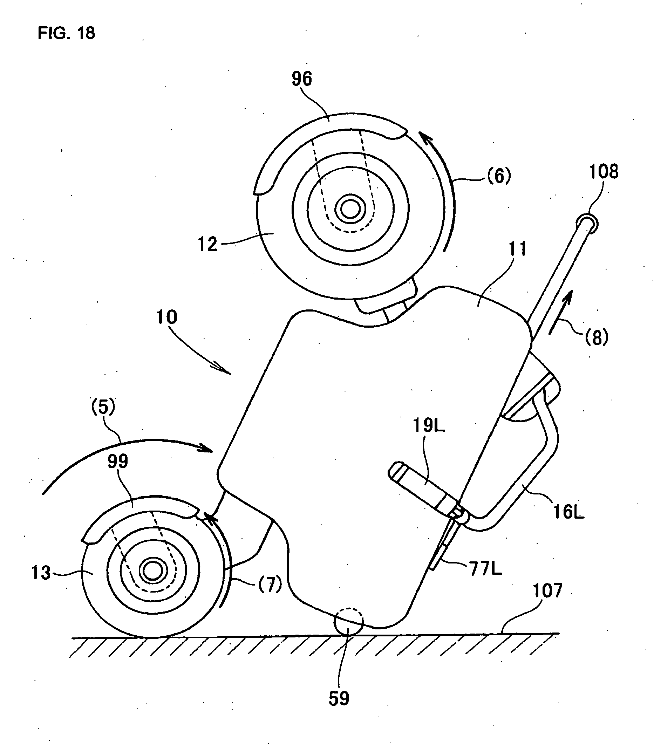

The folded form is shown in FIG. 18 hereinafter described.

Prior to this, a friction mechanism of the present invention is described.

As shown in FIG. 16, while the front wheel 12 is supported for rotation on a front axle 95 of a front wheel supporting member 94 extending from the vehicle body 11 through the steering shaft 87, also a front fender 96 is supported for pivotal motion on the front axle 95.

Similarly, while the rear wheel 13 is supported for rotation on a rear axle 98 of a rear wheel supporting member 97 extending from the vehicle body 11, also a rear fender 99 is supported for rotation on the rear axle 98. The rear wheel supporting member 97 corresponds to a rear swing arm.

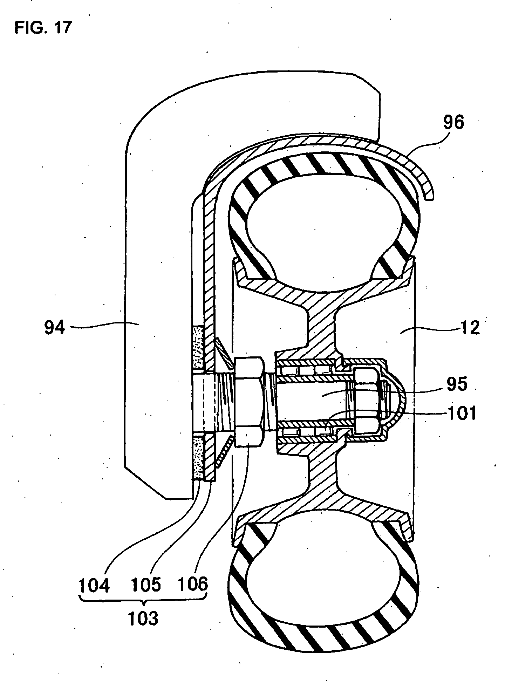

A cross section of a wheel after assembled is described with reference to FIG. 17.

As shown in FIG. 17, the front wheel 12 is supported for rotation on the front axle 95 through a bearing 101. Meanwhile, although the front fender 96 is supported for rotation on the front axle 95, the rotation thereof is constrained suitably by a friction mechanism 103.

The friction mechanism 103 is configured from a friction plate 104 attached to the front wheel supporting member 94, a disk spring 105 for pressing the front fender 96 against the friction plate 104, and an adjusting nut 106 for being screwed on the front axle 95 in order to adjust the pressing force of the disk spring 105.

If rotational force is applied manually to the front fender 96, then at a point of time at which the applied rotational force exceeds frictional force generated between the friction plate 104 and the front fender 96, the front wheel supporting member 94 rotates around the front axle 95. If the external force is removed, then the front wheel supporting member 94 stops at the position.

Since the frictional force generated between the friction plate 104 and the front fender 96 increases as the adjusting nut 106 is tightened but decreases as the adjusting nut 106 is loosened, it can be adjusted arbitrarily.

Since the friction mechanism provided for the rear wheel is same as the friction mechanism 103, description thereof is omitted.

As shown in FIG. 18, the motor driven vehicle 10 is erected as indicated by an arrow mark (5) such that the rollers 59 are positioned downwardly. The motor driven vehicle 10 stands uprightly in a state in which the rollers 59 and the rear wheel 13 contact with the floor 107.

In addition, the front fender 96 is moved to a position at which it covers the upper face and the passage side face of the front wheel 12 as indicated by an arrow mark (6). Similarly, the rear fender 99 is moved to a position at which it covers the upper face and the passage side face of the rear wheel 13 as indicated by an arrow mark (7).

The motor driven vehicle 10 can be kept in such a manner as seen in FIG. 18. Since the motor driven vehicle 10 is erected uprightly, the floor area occupied by the motor driven vehicle 10 is small. Further, when some person passes nearby, since the front wheel 12 dirty with mud is covered with the front fender 96 and the rear wheel 13 is covered with the rear fender 99, there is no possibility that the person may become dirty with the mud.

In order to horizontally move the motor driven vehicle 10 in the erected state, a grip 108 provided for retraction at a front portion of the vehicle body 11 is pulled out as indicated by an arrow mark (8). Then, the grip 108 is pulled to move the rear wheel 13 away from the floor 107. Thereafter, the motor driven vehicle 10 supported by the rollers 59 can be moved to an arbitrary position by pulling the grip 108 horizontally.

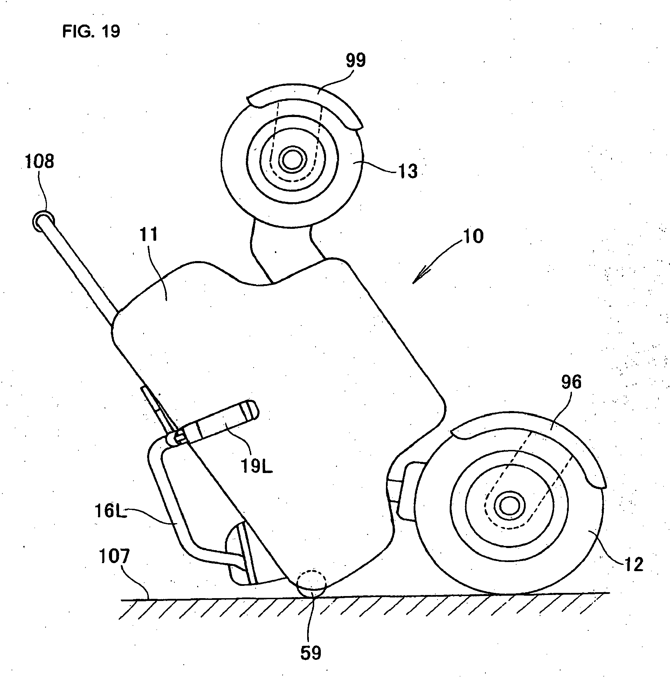

FIG. 19 is a view showing an alteration example of FIG. 18. The rollers 59 are provided at a front portion of the vehicle body 11 and the grip 108 is provided at a rear portion of the vehicle body 11. By the structure, the motor driven vehicle 10 can be erected uprightly such that the rollers 59 and the front wheel 12 contact with the floor 107. Also in this instance, the front wheel 12 dirty with mud is covered with the front fender 96 and the rear wheel 13 is covered with the rear fender 99, and consequently, there is no possibility that a person passing nearby may become dirt with the mud.

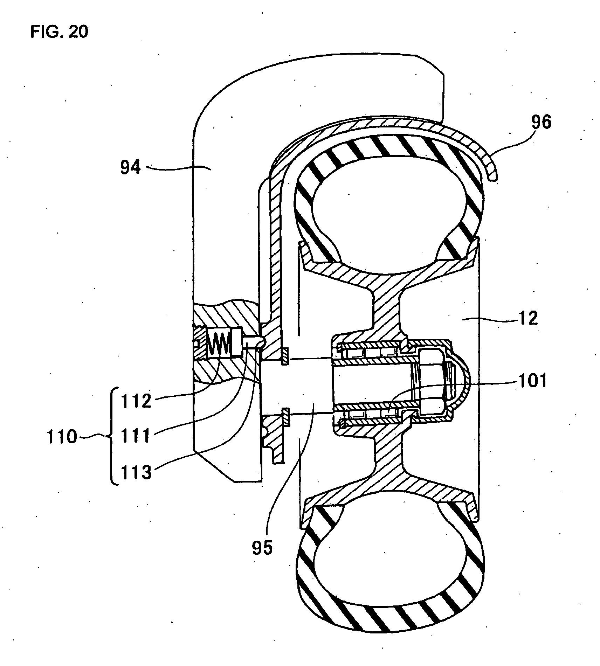

FIG. 20 is a view showing an alteration example of FIG. 17. Although the front fender 96 is supported for rotation on the front axle 95, the rotation thereof is constrained suitably by a click ball mechanism 110.

The click ball mechanism 110 is configured from a click ball 111 accommodated for sliding movement on the front wheel supporting member 94, a spring 112 for urging the click ball 111 outwardly, and a recessed portion 113 provided on the front fender 96 such that an end of the click ball 111 can be fitted therein. A plurality of recessed portions 113 are provided.

When the click ball 111 is fitted in the recessed portion 113, the front fender 96 is constrained. This action is referred to as click action.

If rotational force higher than a fixed level is manually applied to the front fender 96, then the click ball 111 is retracted against the spring 112 and moved out of the recessed portion 113. Consequently, the front wheel supporting member 94 rotates around the front axle 95. If the click ball 111 is fitted into a next recessed portion 113, then the front wheel supporting member 94 stops at the position.

Now, an alteration example of the handle locking mechanism is described with reference to FIG. 21.

As shown in FIG. 21, the lock lever 91 can be provided in the proximity of the left brake lever 21L, particularly at a place in the proximity of the left brake lever 21L and rather near to the vehicle body center from the left brake lever 21L.

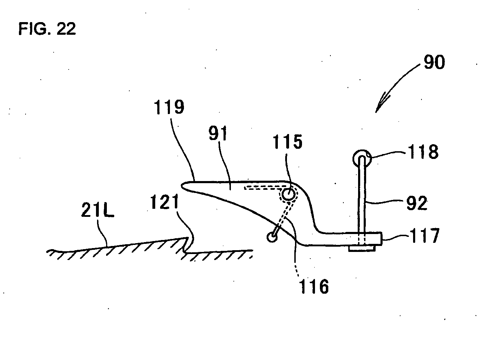

As shown in FIG. 22, the steering lock mechanism 90 includes, as principal components thereof, the lock lever 91 supported for rocking portion on the handle side by a vertical pin 115, a torsion spring 116 for biasing the lock lever 91 in an unlocking direction, and the wire 92 attached at one end thereof to an extension 117 extending from the lock lever 91 toward the vehicle body center. The other elements are same as the parts shown in FIG. 12, and therefore, description of them is omitted.

The wire 92 extends downwardly (in the drawing, from this side to the interior side) through a through-hole 118 perforated downwardly from above on the handle side.

If the driver puts the forefinger of the left hand thereof to and pulls the finger hook portion 119 of the lock lever 91, then the lock lever 91 pivots around the vertical pin 115 in a locking direction (in the drawing, in a counterclockwise direction). Consequently, the wire 92 is returned (loosened).

As the wire 92 is returned, the lock pin 89 is inserted into the perforated plate 88 as seen in FIG. 13 thereby establishing a steering locking state.

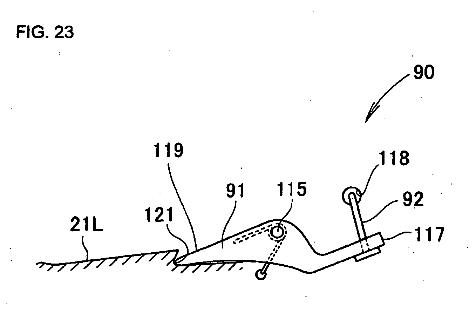

As seen in FIG. 23, upon steering locking, the finger hook portion 119 can be put at an end thereof to a V-shaped portion 121 cut in the front face of the left brake lever 21L to stop the left brake lever 21L. As a result, even if the driver removes the finger, the steering locking state is maintained.

The lock lever 91 in the present example is similar to a "brake lock lever" adopted widely in scooter type vehicles. In addition, the V-shaped portion 121 is provided wide on the front face of the left brake lever 21L.

The driver can carry out steering locking by operating the lock lever 91 provided in the proximity of the left brake lever 21L similarly to ordinary "brake locking operation."

It is to be noted that, while the present invention is applied, in the embodiment, to a motorized motorcycle, it can be applied also to a motorized three-wheeled vehicle and may be applied to general motor driven vehicles.

The present invention is suitably applied to a motorized motorcycle.

10 ... Motor driven vehicle, 11 ... Vehicle body, 12 ... Front wheel, 20 ... Electric motor, 21L ... Brake lever (Left brake lever), 50 ... Vehicle-carried battery, 59 ... Roller, 90 ... Steering lock mechanism, 91 ... Lock lever, 94 ... Front wheel supporting member, 95 ... Axle (Front axle), 96 ... Front fender, 97 ... Rear wheel supporting member, 98 ... Axle (Rear axle), 99 ... Rear fender, 103 ... Friction mechanism, 108 ... Grip, 110 ... Click ball mechanism.

## Claims

1. A motor driven vehicle (10) which runs using an electric motor (20) to which power is applied from a vehicle-carried battery (50) as a driving source, wherein
a front wheel (12) is supported for rotation on a front supporting member (94) extending from a vehicle body (11) while a rear wheel (13) is supported for rotation on a rear supporting member (97) extending from said vehicle body (11),
a front fender (96) is provided for said front wheel (12) while a rear fender (99) is provided for said rear wheel (13), and
a roller (59) is provided at a rear portion of said vehicle body (11) or at a front portion of said vehicle body (11) such that, when the motor driven vehicle is not used, the motor driven vehicle (10) can be moved to an arbitrary place by said roller (59),
**characterized in that**
at least one of said front fender (96) and said rear fender (99) is attached for pivotal motion around an axle (95 or 98) to said front supporting member (94) or said rear supporting member (97) to move said at least one of said front fender (96) and said rear fender (99) from a running position at which it covers an upper portion of said front wheel (12) or said rear wheel (99) to a position for preventing transfer of dirt from said front wheel (12) or said rear wheel (13) to a person in a state in which the motor driven vehicle (10) is erected uprightly so that the roller (59) provided at the rear portion and the rear wheel (13) or the roller (59) provided at the front portion and the front wheel (12) contact with a floor (107) to park or move the motor driven vehicle (10).

2. The motor driven vehicle according to claim 1, wherein
at least one of said front fender (96) and said rear fender (99) is attached to said front supporting member (94) or said rear supporting member (97) through a friction mechanism (103).

3. The motor driven vehicle according to claim 1, wherein
at least one of said front fender (96) and said rear fender (99) is attached to said front supporting member (94) or said rear supporting member (97) through a click ball mechanism (110).

4. The motor driven vehicle according to claim 1, wherein
the roller (59) is provided at the rear portion of said vehicle body (11), and
a grip (108) which can be pulled out is provided at a front portion of said vehicle body (11) such that, by pulling out said grip (108) when said roller (59) is to be used, the motor driven vehicle (10) can be moved to an arbitrary place.

5. The motor driven vehicle according to claim 1, wherein
the roller (59) is provided at the front portion of said vehicle body (11), and
a grip (108) which can be pulled out is provided at a rear portion of said vehicle body (11) such that, by pulling out said grip (108) when said roller (59) is to be used, the motor driven vehicle (10) can be moved to an arbitrary place.

6. The motor driven vehicle according to any one of claims 4 to 5, wherein
a steering lock mechanism (90) for disabling steering of a steering wheel is provided.

7. The motor driven vehicle according to claim 6, wherein
a lock lever (91) which is one of components of said steering lock mechanism (90) and is operated manually is provided in the proximity of a brake lever (21L) provided on a handle member.

## Patentansprüche

1. Motorangetriebenes Fahrzeug (10), das einen elektrischen Motor (20) verwendend fährt, dem Leistung aus einer fahrzeuggetragenen Batterie (5) als eine Antriebsquelle zugeführt wird, wobei ein Vorderrad (12) zum Drehen n einem vorderen Trägerelement (94) getragen wird, das sich von einem Fahrzeugrahmen (11) erstreckt, wohingegen ein Hinterrad (13) zum Drehen von einem hinteren Trägerelement (97) getragen wird, das sich von dem Fahrzeugrahmen (11) erstreckt,
ein vorderer Kotflügel (96) für das Vorderrad (12) vorgesehen ist, wohingegen ein hinterer Kotflügel (99) für das Hinterrad (13) vorgesehen ist, und
eine Rolle (59) an einem hinteren Abschnitt des Fahrzeugrahmens (11) oder an einem vorderen Abschnitt des Fahrzeugrahmens (11) so vorgesehen ist, dass wenn das motorangetriebene Fahrzeug nicht benutzt wird, das motorangetriebene Fahrzeug (10) zu einem beliebigen Platz durch die Rolle (59) bewegt werden kann,
**dadurch gekennzeichnet, dass**
wenigstens entweder der vordere Kotflügel (56) oder der hintere Kotflügel (59) zum Ausführen einer Drehbewegung um eine Achse (95 oder 98) an dem vorderen Trägerelement (94) oder dem hinteren Trägerelement (97) befestigt ist, um wenigstens entweder den vorderen Kotflügel (96) oder den hinteren Kotflügel (99) aus einer Fahrposition, in der er einen oberen Abschnitt des Vorderrads (12) bzw. des Hinterrads (99) abdeckt, in eine Position zum Verhindern des Übertragens von Dreck von dem Vorderrad (12) oder dem Hinterrad (13) auf eine Person in einem Zustand, in dem das motorangetriebene Fahrzeug (10) aufrecht aufgerichtet ist, übertragen wird, so dass die Rolle (59), die an dem hinteren Abschnitt vorgesehen ist und das Hinterrad (13) oder die Rolle (59), die an dem vorderen Abschnitt vorgesehen ist und das Vorderrad (12) den Boden (107) berühren, um zu parken oder das motorangetriebene Fahrzeug (10) zu bewegen.

2. Motorangetriebenes Fahrzeug gemäß Anspruch 1, wobei wenigstens entweder der vordere Kotflügel (96) oder der hintere Kotflügel (99) an dem vorderen Trägerelement (94) oder dem hinteren Trägerelement (97) durch einen Reibungsmechanismus (103) befestigt ist.

3. Motorangetriebenes Fahrzeug gemäß Anspruch 1, wobei wenigstens entweder der vordere Kotflügel (96) oder der hintere Kotflügel (99) an dem vorderen Trägerelement (94) oder dem hinteren Trägerelement (97) durch einen Kugel-Rastmechanismus (110) befestigt ist.

4. Motorangetriebenes Fahrzeug gemäß Anspruch 1, wobei die Rolle (59) an einem hinteren Abschnitt des Fahrzeugrahmens (11) vorgesehen ist, und
ein Griff (108), der herausgezogen werden kann, an einem vorderen Abschnitt des Fahrzeugrahmens (11) so vorgesehen ist, dass, durch Herausziehen des Griffs (108), wenn die Rolle (59) benutzt werden soll, das motorangetriebenes Fahrzeug (10) zu einem beliebigen Platz bewegt werden kann.

5. Motorangetriebenes Fahrzeug gemäß Anspruch 1, wobei die Rolle (59) an einem vorderen Abschnitt des Fahrzeugrahmens (11) vorgesehen ist und
ein Griff (108), der herausgezogen werden kann, an einem hinteren Abschnitt des Fahrzeugrahmens (11) so vorgesehen ist, dass durch Herausziehen des Griffs (108), wenn die Rolle (59) benutzt werden soll, das motorangetriebene Fahrzeug (10) an einem beliebigen Platz bewegt werden kann.

6. Motorangetriebenes Fahrzeug gemäß einem der Ansprüche 4 bis 5, wobei
ein Lenkerblockiermechanismus (90) zum Deaktivieren des Steuerns eines Steuerrads vorgesehen ist.

7. Motorangetriebenes Fahrzeug gemäß Anspruch 6, wobei ein Blockierhebel (91), der eine der Komponenten des Lenkungsblockiermechanismus (90) ist und der manuell bedient wird, in der Nähe eines Bremshebels (21L) vorgesehen ist, der an einem Henkelelement vorgesehen ist.

## Revendications

1. Véhicule à moteur (10) qui fonctionne en utilisant un moteur électrique (20) auquel une puissance est appliquée en provenance d'une batterie embarquée sur le véhicule (50) comme source d'entraînement, dans lequel
une roue avant (12) est supportée en rotation sur un organe de support avant (94) s'étendant à partir d'une carcasse de véhicule (11) alors qu'une roue arrière (13) est supportée en rotation sur un organe de support arrière (97) s'étendant à partir de ladite carcasse de véhicule (11),
un garde-boue avant (96) est prévu pour ladite roue avant (12) alors qu'un garde-boue arrière (99) est prévu pour ladite roue arrière (13), et
un rouleau (59) est prévu au niveau d'une portion arrière de ladite carcasse de véhicule (11) ou au niveau d'une portion avant de ladite carcasse de véhicule (11), de sorte que, lorsque le véhicule à moteur n'est pas utilisé, le véhicule à moteur (10) peut être déplacé vers un lieu arbitraire par ledit rouleau (59),
**caractérisé en ce que**
au moins l'un dudit garde-boue avant (96) et dudit garde-boue arrière (99) est fixé pour un mouvement pivotant autour d'un axe (95 ou 98) audit organe de support avant (94) ou audit organe de support arrière (97) pour déplacer ledit au moins un dudit garde-boue avant (96) ou dudit garde-boue arrière (99) d'une position de marche lors de laquelle il couvre une partie supérieure de ladite roue avant (12) ou de ladite roue arrière (99) vers une position destinée à empêcher le transfert de saleté provenant de ladite roue avant (12) ou de ladite roue arrière (13) vers une personne dans un état dans lequel le véhicule à moteur (10) est érigé verticalement de sorte que le rouleau (59) prévu au niveau de la portion arrière et de la roue arrière (13) ou le rouleau (59) prévu au niveau de la portion avant et de la roue avant (12) entre en contact avec un sol (107) pour garer ou déplacer le véhicule à moteur (10).

2. Véhicule à moteur selon la revendication 1, dans lequel
au moins l'un dudit garde-boue avant (96) et dudit garde-boue arrière (99) est fixé audit organe de support avant (94) ou audit organe de support arrière (97) via un mécanisme de frottement (103).

3. Véhicule à moteur selon la revendication 1, dans lequel
au moins l'un dudit garde-boue avant (96) et dudit garde-boue arrière (99) est fixé audit organe de support avant (94) ou audit organe de support arrière (97) via un mécanisme à cliquet et bille (110).

4. Véhicule à moteur selon la revendication 1, dans lequel
le rouleau (59) est prévu au niveau de la portion arrière de ladite carcasse de véhicule (11), et
un élément de préhension (108) qui peut être retiré est prévu au niveau d'une portion avant de ladite carcasse de véhicule (11) de sorte que, en retirant ledit élément de préhension (108) lorsque ledit rouleau (59) doit être utilisé, le véhicule à moteur (10) peut être déplacé vers un lieu arbitraire.

5. Véhicule à moteur selon la revendication 1, dans lequel
le rouleau (59) est prévu au niveau de la portion avant de ladite carcasse de véhicule (11), et
un élément de préhension (108) qui peut être retiré est prévu au niveau d'une portion arrière dudit corps de véhicule (11) de sorte que, en retirant ledit élément de préhension (108) lorsque ledit rouleau (59) doit être utilisé, le véhicule à moteur (10) puisse être déplacé vers un lieu arbitraire.

6. Véhicule à moteur selon l'une quelconque des revendications 4 à 5, dans lequel
un mécanisme de blocage de direction (90) destiné à désactiver la direction par un volant est prévu.

7. Véhicule à moteur selon la revendication 6, dans lequel
un levier de blocage (91) qui est l'un des composants dudit mécanisme de blocage de direction (90) et est actionné manuellement est prévu à proximité d'un levier de frein (21L) prévu sur un organe de poignée.
